# EUROPEAN PATENT SPECIFICATION

(11) **EP 3 827 059 B1**
(45) Date of publication and mention of the grant of the patent: **04.05.2022**
(21) Application number: 19740020.3
(22) Date of filing: 19.07.2019
(51) Int. Cl.: C09D 167/08

(54) **WATER-IN-OIL COATING COMPOSITION**
WASSER-IN-ÖL ALKYDFARBE MIT EINEM NATRIUMSALZ
PEINTURE ALKYDE EAU-DANS-L'HUILE COMPRENANT UN SEL DE SODIUM

(30) Priority: 23.07.2018 EP 18184957; 18.02.2019 EP 19157837
(43) Date of publication of application: 02.06.2021
(73) Proprietor: Akzo Nobel Coatings International B.V., 1077 WW Amsterdam (NL)
(72) Inventor: FLAPPER, Jitte, 1115 GH Duivendrecht (NL)
(74) Representative: Akzo Nobel IP Department
(86) International application number: PCT/EP2019/069499
(87) International publication number: WO 2020/020772

(56) References cited:
- WO-A1-2013/092442
- CN-A- 108 285 724
- GB-A- 1 071 164
- US-A- 2 393 874

## Description

### Field of the Invention

The present invention relates to a water-in-oil coating composition comprising a water phase emulsified in a non-aqueous liquid phase, wherein the non-aqueous phase comprises an autoxidizable binder, to a substrate coated with a coating deposited from such water-in-oil coating composition, and to a process to improve the aged drying of a water-in-oil coating composition.

### Background of the Invention

Autoxidizable resins are well-known in the coatings industry. Alkyd resins are an example of autoxidizable resins. Other examples of autoxidizable resins are resins comprising unsaturated ether groups such as found in e.g. allyl ethers, cyclopentenylethers and vinyl dioxolanes, and polymers or copolymers of butadiene.

Alkyd resins are widely used in coating compositions such as paint. An alkyd resin is a fatty acid functionalized polyester resin that comprises unsaturated fatty acids, such as for example oleic acid, linoleic acid, or linolenic acid. Drying of paints comprising autoxidizable resins, comprises evaporation of the liquid carrier (organic solvent and/or water) and, subsequently, hardening of the resin via radical autoxidation reactions. The latter is known as chemical or oxidative drying. The fatty acid moieties of the alkyd resin react with oxygen from the atmosphere to form hydroperoxides which subsequently decompose to form free radicals. Recombination of these free radicals causes covalent bonds to be formed between the alkyd polymer chains, thus forming cross-links between polymer chains. In this way, a liquid coating composition that comprises alkyd resin hardens to form a solid cured coating. This process is also referred to as autoxidation or oxidative drying.

Alkyd paints typically form a hard, glossy surface that is easy to clean and resists scratching, water, and chemicals. They are primarily used for trim, doors, cabinets, furniture, floors and other high-use areas, and are popular with professional painters because they adhere well to most surfaces and "level out" to hide brush marks and small surface irregularities, and cure to a smooth surface that latex paints cannot match.

Alkyd paints often are solvent-based. Such solvent-based alkyd paints comprise an organic solvent in which the alkyd resin is dissolved. Such solvent-based paints typically comprise high levels of volatile organic compounds (VOC). Today, water is often added to solvent-based alkyd paints in order to reduce the VOC content. Such paints are often referred to as alkyd paints with water inclusion, alkyd/water inclusion paints, or water-in-oil paints. Typical alkyd/water inclusion paints contain 10-15 % of water in the liquid formulation (Substitution of cobalt in wood protection products, as published by Ministry of Environment and Food, the Danish Environmental Protection Agency, Environmental project No. 1791, 2015, ISBN no. 978-87-93352-76-6). Water-in-oil alkyd paints with water contents up to 30 % do exist.

The time for alkyd paints to dry depends on the concentration and type of unsaturated oil or fatty acids used to prepare the resin. Autoxidation and crosslinking of the unsaturated fatty acid component can proceed unaided, but the time for drying is generally found to be unacceptably long for many practical purposes. The reactions are significantly accelerated by the presence of a metal-based drying catalyst, commonly referred to as a "drier" or "siccative". Whereas an alkyd coating may take months to dry in the absence of a drying catalyst, in the presence of such a catalyst, drying can be accomplished within a much shorter time.

Well-known driers include salts containing cobalt (Co), cerium (Ce), iron (Fe), manganese (Mn) and vanadium (V) as the cation; and halides, nitrates, sulphates, and carboxylates such as acetates, ethylhexanoates, octanoates, neodecanoates, and naphthenates, or acetoacetonates, as the anion. The catalytic activity of the polyvalent metal during decomposition of the (hydro)peroxide relies on the repeated transition of the metal ion from the lower to the higher oxidation state and back again, leading to reduction and oxidation of the hydroperoxides to catalyze and accelerate oxidation of the unsaturated oil component of the composition. For this reason, transition metals are commonly employed in such driers, since transition metals are capable of switching from a lower valence state to a higher valence state in a redox reaction with fatty acid peroxides present in the alkyd.

Three different types of driers have been identified (WO2012079624; Soucek et al Prog. Org Chem. 73, (2012) pp 435-454). Primary driers, also referred to as top driers, surface driers, or oxidation driers, promote the top-down hardening of a liquid alkyd resin. The mode of action of primary driers in the autoxidative curing process is deactivation of natural occurring anti-oxidants, oxygen uptake, peroxide formation and peroxide decomposition. Primary driers are characterized by having at least two accessible valence states which allows catalytic hydroperoxide decomposition and regeneration of the active species. Examples of primary driers are cobalt (Co), cerium (Ce), iron (Fe), manganese (Mn) and vanadium (V) salts. To enhance homogeneous through-drying of a coating film, primary driers are frequently used in combination with secondary and coordination driers. WO2013/092442 for example discloses a coating comprising an alkyd resin as a binder polymer and a manganese based drier.

Coordination driers, also referred to as through driers, promote the film-forming process by interaction with the carboxyl and hydroxyl groups in the polymeric binder. Thus, coordination driers can bridge two or more polymer chains. These carboxyl and hydroxyl groups may be initially present in the binder molecule or may be formed during the autoxidation process. Examples of coordination driers are metal driers based on zirconium (Zr), strontium (Sr), aluminum (Al), bismuth (Bi), lanthanum (La), neodymium (Nd) lead (Pb), and barium (Ba).

Secondary driers, also referred to as auxiliary driers, are metal driers that exist in a single oxidation state and are not catalytically active by themselves. Secondary driers affect the drying rate by interacting with primary driers. Secondary driers include calcium (Ca), zinc (Zn), potassium (K) and lithium (Li) metal soaps.

To improve appearance and quality of the resulting coating film and to accelerate drying, primary driers may be combined with coordination driers and/or secondary driers.

The most widely used primary driers are cobalt carboxylates because of their good drying performance at ambient temperature and coloristic properties. However, their applicability might be restricted in the near future because of regulation issues.

Primary driers based on non-cobalt metals, in particular primary driers comprising complexes of iron or manganese and nitrogen donor ligands are known. In J.W de Boer et al., The quest for Cobalt-Free Alkyd Paint Driers, Eur. J. Inorg. Chem, 2013, 3581-3591, an overview of such driers is given.

A problem with water-in-oil alkyd coating compositions is 'retardation of aged drying': it takes longer for a coating layer to dry after prolonged storage of the paint. In other words, it takes longer for a coating layer to dry, if it is applied from a paint that has been stored for 10 weeks compared to a paint that has been stored for one week. This phenomenon is sometimes referred to as "loss of dry time stability". It is believed that the phenomenon is caused by deactivation of the primary drier in the presence of water.

In WO 2010/054461 is disclosed a stabilized drier for water-in-oil alkyd based compositions. The stabilized drier comprises an inclusion complex of a cyclodextrin and a metal drier. A disadvantage of cyclodextrins is, however, that cyclodextrins may form inclusion complexes with a wide range of compounds in aqueous solution, such as biocides and corrosion inhibitors. Such inclusion complexes may render the compounds inactive.

The issues with respect to drying of alkyd based paints, as described above, equally apply to other autoxidizable coatings.

There is a need for autoxidizable coating compositions, such as alkyd based coating compositions, that are formulated as water-in-oil compositions in order to have low VOC levels and do not exhibit retardation of the aged drying, whilst maintaining other coating properties such as gloss and hardness.

### Summary of the Invention

Surprisingly, it has now been found that if a carbonate or an organic salt of an alkali metal or of an alkaline earth metal is dissolved in the aqueous phase of a water-in-oil coating composition with an autoxidizable binder and a primary drier, the aged drying significantly improves. This allows paint manufacturers, paint shops and painters to store the water-in-oil paint for a longer period of time.

Accordingly, the invention provides in a first aspect a water-in-oil coating composition comprising a water phase emulsified in a non-aqueous liquid phase, wherein the non-aqueous phase comprises an autoxidizable binder and wherein a salt is dissolved in the water phase, wherein the salt is a carbonate or an organic salt of an alkali or alkaline earth metal, and wherein the coating composition comprises a primary drier.

An important advantage of the coating composition of the present invention is that it combines low VOC levels with the advantageous properties of autoxidizable coatings such as alkyd paints, such as good gloss and hardness, whilst reducing the issue of prolonged aged drying.

A further advantage of the addition of the above-defined alkali or alkaline earth metal salt to the aqueous phase of a water-in-oil coating composition is that a wide range of primary driers can be used, including conventional metal salt driers, cobalt-free metal-ligand complexes, and polymeric cobalt driers such as e.g. as disclosed in WO 2010/076031.

In a second aspect, the invention provides a substrate coated with a coating deposited from a coating composition according to the first aspect of the invention.

In a third aspect the invention provides a process to improve the aged drying of a water-in-oil coating composition comprising the steps of:
a. providing a water-in-oil coating composition comprising a water phase emulsified in a non-aqueous liquid phase, wherein the non-aqueous phase comprises an autoxidizable binder, and wherein the coating composition comprises a primary drier; and
b. dissolving a salt that is a carbonate or an organic salt of an alkali or alkaline earth metal in the water phase in an amount in the range of from 0.1 to 10 wt% based on the weight of the water phase.

### Detailed Description of the Invention

The water-in-oil coating composition according to the invention comprises a water phase emulsified in a non-aqueous liquid phase. The non-aqueous phase comprises an autoxidizable binder. In the water phase, a carbonate or organic salt of an alkali metal or an alkaline earth metal is dissolved.

The salt dissolved in the water phase is a carbonate or an organic salt such as a carboxylate, sulphonate, phosponate, or phosphinate salts. Reference herein to a carbonate is to a salt with at least one CO₃²⁻ ion, including bicarbonate salts.

The alkali metal or alkaline earth metal preferably is lithium, sodium, potassium, cesium, magnesium, calcium, strontium, or barium, more preferably lithium, sodium, potassium, cesium, or magnesium. A particularly preferred metal is sodium.

The alkali or alkaline earth metal salt is dissolved in the water phase. The salt preferably has a solubility in water of at least 100 grams per litre, more preferably at least 500 grams per litre, as determined in demineralized water at 298 K. Preferably, the solubility of the alkali or alkaline earth metal salt in the water phase is at least 10 times higher than its solubility in the non-aqueous phase, more preferably at least 100 times higher, even more preferably at least 500 times higher, still more preferably at least 1.000 times higher. Preferably, the alkali or alkaline earth metal salt has a solubility in the water phase of at least 100 grams per litre and the solubility of the salt in the water phase is at least 10 times higher than the solubility of the salt in the non-aqueous phase. The solubility of the alkali or alkaline earth metal salt in the non-aqueous phase is preferably less than 100 g/L, more preferably less than 50 g/L, even more preferably less than 10 g/L, e.g. at most 5, 1, or 0.5 g/L, particularly preferred at most 0.1 g/L. Reference herein to solubility is to solubility determined at 298 K.

If the salt is an organic salt, it preferably is a carboxylate salt with a carboxylate anion and a metal cation. The carboxylate anion may be a mono- or di-carboxylate anion, preferably a mono-carboxylate anion. The carboxylate anion may be an aliphatic or aromatic carboxylate anion, preferably an aliphatic carboxylate anion. The carboxylate anion may have one or more pendant polar groups to increase the solubility in water. Preferably, the carboxylate anion is a saturated, branched or straight-chain aliphatic, monocarboxylate anion.

The carboxylate anion may have 1 to 16 carbon atoms, more preferably 2 to 10 carbon atoms, even more preferably 2 to 8 carbon atoms. Even more preferably, the carboxylate anion is selected from the group consisting of acetate, propionate, and 2-ethyl-hexanoate. It will be appreciated that the maximum number of carbon atoms in the carboxylate anion for a water soluble salt will depend on the metal cation and on the optional presence of pendant polar groups. If the metal cation is sodium, the carboxylate anion may have up to 8 or even 10 carbon atoms. If the metal cation is a metal cation other than sodium, the carboxylate anion may have up to 4 carbon atoms, preferably 2 or 3 carbon atoms.

Particularly preferred salts are selected from the group consisting of sodium acetate, sodium propionate, and sodium 2-ethyl hexanoate, lithium acetate, potassium acetate, magnesium acetate, and mixtures of two or more thereof. Especially preferred salts are selected from the group consisting of sodium acetate, sodium propionate, and sodium 2-ethyl hexanoate.

The coating composition preferably comprises at least 0.1 wt% of alkali or alkaline earth metal salt in the water phase, based on the weight of the water phase, preferably at least 0.5 wt%, more preferably at least 1.0 wt%. The upper limit is not especially critical. Preferably, the coating composition comprises at most 10 wt% of alkali or alkaline earth metal salt in the water phase, based on the weight of the water phase, more preferably at most 5 wt%. Based on the total weight of the coating composition, the coating composition preferably comprises at least 0.02 wt% of alkali or alkaline earth metal salt, more preferably at least 0.1 wt%, even more preferably at least 0.2 wt%.

Preferably, the water-in-oil coating composition comprises less than 0.1 wt% of cyclodextrin based on the weight of autoxidizable binder, more preferably less than 0.05 wt% of cyclodextrin, even more preferably less than 0.001 wt% of cyclodextrin. The amount of cyclodextrin herein refers to the total amount of alpha, beta, and gamma cyclodextrins. In a particularly preferred embodiment, the coating composition is free of cyclodextrin.

The water-in-oil coating composition may comprise any suitable amount of water. Preferably, the water-in-oil coating composition comprises more than 5.0 wt% of water, more preferably more than 7.5 wt%, even more preferably more than 10 wt%, still more preferably more than 12.5 wt%. Water-in-oil coating compositions comprising at least 15 wt% water are particularly preferred.

The amount of water in a water-in-oil coating composition preferably does not exceed 49 wt% of the total composition since at such high levels the emulsion may become instable or inverse into an oil-in-water composition. Accordingly, the amount of water in the water-in-oil coating composition is preferably less than 49 wt%, More preferably the amount of water is less than 45 wt%, even more preferably less than 40 wt%, still more preferably less than 30 wt%, most preferably less than 25 wt%.

The water-in-oil coating composition comprises a primary drier. The primary drier may be any primary drier known in the art in any suitable amount. The primary drier may for example be a salt of cobalt, cerium, iron, manganese, and/or vanadium, a cobalt-free metal-ligand complex, or a polymeric cobalt drier. Preferably, the coating composition does not comprise cobalt and is thus free of a primary drier comprising cobalt. The coating composition may further comprise coordination driers and/or secondary driers. Besides driers, the coating composition may optionally comprise drying-accelerating complexing agents, for example, 2,2'-bipyridyl and 1,10-phenantroline. The complexing agents can be added in an amount of from 0 to 3 wt. %, preferably from 0.1 to 1.5 wt.%, based on the weight of the total resin.

The non-aqueous phase comprises an autoxidizable binder. Any suitable autoxidizable binder may be used. Preferably the autoxidizable binder is an alkyd resin. Reference herein to alkyd resins is to alkyds and to modified alkyds such as for example polyurethane modified alkyds, silicone modified alkyds, styrene modified alkyds, (meth)acrylic modified alkyds, vinylated alkyds, polyamide modified alkyds, or epoxy modified alkyds.

Any suitable alkyd resin may be used. Such alkyd resins are known in the art. Suitable autoxidizable alkyd resins for use in the invention, are in general the reaction product of the esterification of polyhydric alcohols with polybasic acids (or their anhydrides) and unsaturated fatty acids (or glycerol esters thereof), for example derived from linseed oil, tung oil, tall oil as well as from other drying or semi-drying oils. The properties are primarily determined by the nature and the ratios of the alcohols and acids used and by the degree of condensation. The alkyd resin may have any suitable molecular weight, oil length, or unsaturation of its fatty acid chains.

The non-aqueous phase is a liquid phase and may comprise a suitable organic solvent to dissolve the autoxidizable binder, for instance an aromatic solvent such as toluene or xylene, or an aliphatic hydrocarbon solvent such as linear or branched alkanes comprising 6 to 10 carbon atoms. Commercially available solvents such as Shellsol^{(R)} D40, Shellsol^{(R)} D60, Dowanol^{(R)} PMA, and Solvesso^{(R)}-150 may be used.

The autoxidizable resin may be present in the water-in-oil coating composition in any suitable amount, depending on the intended use of the coating. Preferably, the non-aqueous phase comprises in the range of from 20 wt% to 95 wt% autoxidizable resin based on the total weight of the non-aqueous phase, more preferably of from 30 to 90 wt%, even more preferably of from 35 to 70 wt%.

Surfactants may be used to assist emulsification of the water in the non-aqueous phase. Suitable surfactants are known in the art and include conventional anionic, cationic and/or non-ionic surfactants. Preferably, the composition of the invention further comprises one or more surfactants.

The coating composition may comprise one or more additives. Any additives known to be suitable for coating compositions with autoxidizable binders, such as alkyds, may be used. Examples of suitable additives include anti-skinning agents, UV stabilizers, dispersants, surfactants, anti-static agents, flame-retardant agents, lubricants, anti-foaming agents, plasticizers, anti-freezing agents, waxes, and thickeners. The total amount of additives will usually be less than 5 wt%, based on the total weight of the coating composition, preferably less than 3 wt%.

The water-in-oil coating composition may be prepared in any suitable way, typically by emulsifying water, under high shear conditions, in a non-aqueous phase that comprises the autoxidizable binder. Suitable emulsification methods are known in the art. In the materials and methods section of Aurenty et al., Langmuir, 1995 vol. 11, pp 4712-4718, is for example disclosed a suitable emulsification method.

The coating composition according to the invention may for example be used as an adhesive, a primer, a topcoat, a high-gloss or a matt coating, a wood coating, a wall paint or a flooring paint. The coating composition may suitably be used to coat any suitable substrate, such as for example wood, wood-based substrates (e.g. fibreboard, chipboard), metal, mineral substrates (e.g. stone, plaster, concrete, masonry, cement, gypsum), plastic substrates, fibre-based substrates, ceramic substrates such as glass, asphalt, leather, paper.

The invention also relates to a substrate coated with a coating deposited from a water-in-oil coating composition according to the invention. The water-in-oil coating composition may be applied to the substrate by any suitable method known in the art, such as for example brushing, dipping, spraying, or roller coating.

The invention further relates to a process to improve the aged drying of a water-in-oil coating composition comprising the steps of:
a. providing a water-in-oil coating composition comprising a water phase emulsified in a non-aqueous liquid phase, wherein the non-aqueous phase comprises an autoxidizable binder, and wherein the coating composition comprises a primary drier;
b. dissolving in the water phase a salt as specified above in connection with the coating composition according to the invention, in an amount in the range of from 0.1 to 10 wt% based on the weight of the water phase, preferably of from 1 to 5 wt%.

The water-in-oil coating of step a. is as described above, including its preferred features, except that no salt of alkali or alkaline earth metal is dissolved in its water phase.

By dissolving such salt in the water phase in step b., the aged drying of the composition is improved compared to the aged drying of the original water-in-oil coating composition. It is understood that by adding the water-soluble salt to the coating composition, the salt dissolves in the aqueous phase.

The present invention is illustrated by means of the following non-limiting examples.

### Examples

### Drying time

Drying times were determined according to ASTM D5895-13 using a BK recorder (wet film thickness 90 µm). After the application of the film on a glass panel (300 x 25 mm), a vertical blunt needle, pressed upon by a 5 g load, was placed into the freshly applied film and then dragged in a straight line through the drying paint in longitudinal direction of the panel. The so-called 'dry-hard time', i.e. when drying has proceeded sufficiently that the paint film is not displaced anymore (Stage III of drying in ASTM D5895-13) was determined for fresh paints (within a day of preparation) and for paints that had been stored at 35 °C or at 50 °C for 2, 5 or 8 weeks. Drying time was determined at 10 °C and 85 % relative humidity and at 23 °C and 50% relative humidity. The drying at 10 °C was determined by applying the paint at 23 °C. Immediately after application the painted glass strip was moved into a room with a temperature of 10 °C.

### Water-in-oil coating compositions

### Base A (reference) - no salt

A base water-in-oil composition A was prepared comprising 15.5 weight parts of water emulsified in a non-aqueous phase comprising 48 weight parts of alkyd (Setal 270 SM-70 (Allnex; a commercially available air-drying long oil alkyd resin based on soya bean oil), 24.5 weight parts of Tioxide TR 92 (titanium dioxide, rutile, Huntsman Pigments), 0.1 weight parts of Nuosperse 657 (a wetting and dispersing agent, Elementis Specialties), 0.2 weight parts of Bentone SD-1 (a Rheological Additive, Elementis Specialties), 0.4 weight parts of Exkin 2 (methyl ethyl ketoxime, Huntsman Pigments), and 8.2 weight parts of Exxsol D40 (hydrotreated heavy Naphtha (petroleum)).

### Base B - sodium 2-ethyl hexanoate

A base water-in-oil composition B was prepared that was similar to base composition A, except that 15.5 weight parts of a 2 wt% aqueous sodium 2-ethyl hexanoate solution were emulsified in the non-aqueous phase instead of water.

### Base C (reference) - no salt

A base water-in-oil composition C was prepared that was similar to base composition A, except that 15.4 weight parts of water were emulsified in the non-aqueous phase and the non-aqueous phase comprised 12.1 weight parts of Exxsol D40.

### Base D - sodium 2-ethyl hexanoate

A base water-in-oil composition D was prepared that was similar to base composition C, except that 15.4 weight parts of a 2.0 wt% aqueous sodium 2-ethyl hexanoate solution were emulsified in the non-aqueous phase instead of water.

### Base E (reference) - sodium chloride

A base water-in-oil composition E was prepared that was similar to base composition C, except that 15.4 weight parts of a 1.0 wt% aqueous sodium chloride solution were emulsified in the non-aqueous phase instead of water.

### Base F - sodium acetate trihydrate

A base water-in-oil composition F was prepared that was similar to base composition C, except that 15.4 weight parts of a 2.3 wt% aqueous sodium acetate trihydrate solution were emulsified in the non-aqueous phase instead of water.

### Base G (reference) - no salt

A base water-in-oil composition G was prepared that was similar to base composition A, except that 15.4 weight parts of water were emulsified into the non-aqueous phase and the non-aqueous phase comprises 48.4 weight parts of alkyd (Setal 270 SM-70) and 13.6 weight parts of Exxsol D40.

### Base H - sodium 2-ethyl hexanoate

A base water-in-oil composition H was prepared that was similar to base composition G, except that 15.4 weight parts of a 2.0 wt% aqueous sodium 2-ethyl hexanoate solution were emulsified in the non-aqueous phase instead of water.

### Base I - sodium 2-ethyl hexanoate

A base water-in-oil composition I was prepared comprising 15.7 weight parts of a 1.6 wt% aqueous sodium 2-ethyl hexanoate solution emulsified in a non-aqueous phase comprising 49 weight parts of alkyd (Setal 270 SM-70), 25 weight parts of Tioxide TR 92, 0.1 weight parts of Nuosperse 657, 0.2 weight parts of Bentone SD-1, 0.4 weight parts of Exkin 2, 8.3 weight parts of Exxsol D40, 0.5 weight parts of Nuodex Ca5, and 1.0 weight parts of Nuodex Zr18.

### Base J - potassium acetate

A base water-in-oil composition J was prepared that was similar to base composition I, except that 15.7 weight parts of a 1.2 wt% aqueous potassium acetate solution were emulsified in the non-aqueous phase.

### Base K - lithium acetate dihydrate

A base water-in-oil composition K was prepared that was similar to base composition I, except that 15.7 weight parts of a 1.2 wt% aqueous lithium acetate dihydrate solution were emulsified in the non-aqueous phase.

### Base L - magnesium acetate tetrahydrate

A base water-in-oil composition L was prepared that was similar to base composition I, except that 15.7 weight parts of a 2.5 wt% aqueous magnesium acetate tetrahydrate solution were emulsified in the non-aqueous phase.

**Table 1 Base water-in-oil compositions**

| Base | Salt | |
|---|---|---|
| A | none | reference |
| B | sodium 2-ethyl hexanoate | invention |
| C | none | reference |
| D | sodium 2-ethyl hexanoate | invention |
| E | sodium chloride | reference |
| F | sodium acetate trihydrate | invention |
| G | none | reference |
| H | sodium 2-ethyl hexanoate | invention |
| I | sodium 2-ethyl hexanoate | invention |
| J | potassium acetate | invention |
| K | lithium acetate dihydrate | invention |
| L | magnesium acetate tetrahydrate | invention |

### Preparation of paints with driers

Different finished paints were prepared by addition of a primary drier and optionally a secondary drier (Nuodex Ca5) and an auxiliary drier (Nuodex Zr18). The driers used are listed in Table 2.

**Table 2 Driers used in the examples**

| code | description | Commercial name (supplier) | metal wt% |
|---|---|---|---|
| Co | cobalt neodecanoate | Durham Nuodex Cobalt 10 Neo (Venator) | 10 |
| DC | complex of Mn and 1,4,7-trimethyl-1,4,7-triazacyclononane | Nuodex^{®} DryCoat (Venator) | 1 |
| BOC | complex of Fe and bispidon | Borchi OXY- Coat (Borchers) | 0.09 |
| Mn/ ligand | manganese ethylhexanoate + trimethyltriazacyclononane ligand (mole ratio 1:1) | Nuodex Mn10 (B+Venator)/ligand (Catexel) | |
| DriCAT | complex of Mn and an organic ligand | DriCAT 2700F (Dura Chemicals) | 0.1 |
| ECOS | cobalt-containing polymer | ECOS ND 15 (Umicore) | 4 |
| Ca | calcium carboxylate | Nuodex Ca5 (Venator) | 5 |
| Zr | zirconium carboxylate | Nuodex Zr18 (Venator) | 18 |

### Example 1 - Retardation of aged drying after storage at 35 °C

Paints were prepared using base A and base B by adding driers of the type as indicated in Table 3. Initial drying time and drying time after 2, 5 and 8 weeks storage at 35 °C were determined as described above.

**Table 3 - Effect of sodium carboxylate on aged drying (storage 35 °C)**

| Paint no. | Base | Primary drier | Co-driers | BK drying at 10 °C (hours) | | | | BK drying at 23 °C (hours) | | | |
|---|---|---|---|---|---|---|---|---|---|---|---|
| | | | | initial | 2 wks | 5 wks | 8 wks | initial | 2 wks | 5 wks | 8 wks |
| 1.1 | A | Mn^{a}/ligand | Ca^{c}+Zr^{d} | 3.6 | 5.5 | 10.4 | 10.3 | 2.8 | 3.4 | 5.4 | 4.5 |
| 1.2 | B | Mn^{a}/ligand | Ca^{c}+Zr^{d} | 3.3 | 4.0 | 5.6 | 6.5 | 1.8 | 1.9 | 3.8 | 2.4 |
| 1.3 | A | Co^{b} | Ca^{c}+Zr^{d} | 5.8 | 8.6 | 9.4 | 11.6 | 2.8 | 6.1 | 5.4 | 7.8 |
| 1.4 | B | Co^{b} | Ca^{c}+Zr^{d} | 4.4 | 6.3 | 7.5 | 8.3 | 2.0 | 3.1 | 4.3 | 4.7 |

| | | | | | | | | | | | |
|---|---|---|---|---|---|---|---|---|---|---|---|
| ^{a} 1.0.10⁻² wt% Mn on total composition; ^{b} 3.4.10⁻² wt% Co on total composition; ^{c} 2.4.10⁻² wt% Ca on total composition; ^{d} 17.10⁻² wt% Zr on total composition. | | | | | | | | | | | |

The examples show that the addition of sodium 2-ethyl hexanoate to the aqueous phase of a water-in-oil alkyd paint reduces the drying time both of fresh and of aged paint.

### Example 2 - Retardation of aged drying after storage at 50 °C

Paints were prepared using bases C, D, E and F by adding driers of the type as indicated in Table 4. Initial drying time and drying time after 2, 5 and 8 weeks storage at 50 °C were determined as described above.

Paints with base C (no salt) and paints with base E (sodium chloride as salt) are comparative examples. These examples show that the addition of sodium chloride has no or only a minor effect on the drying. The paints with sodium 2-ethyl hexanoate (paint with base D) all show a reduction in drying time when compared to paints without salt. Likewise, the addition of sodium acetate (paints with base F) causes a reduction in drying time both at 10 °C and 23 °C, especially after storage of the paint for 2-8 weeks at 50 °C. It is known to the skilled person that storage at elevated temperature provides a good indication of coating characteristics upon prolonged storage at room temperature.

**Table 4 Effect of sodium salts on aged drying (storage 50 °C)**

| Paint no. | Base | Primary drier | Co-driers | BK drying at 10 °C (hours) | | | | BK drying at 23 °C (hours) | | | |
|---|---|---|---|---|---|---|---|---|---|---|---|
| | | | | initial | 2 wks | 5 wks | 8 wks | initial | 2 wks | 5 wks | 8 wks |
| 2.1 | C | Mn^{e}/ligand | Ca^{c}+Zr^{d} | 3.0 | 6.5 | 7.8 | 8.0 | 1.8 | 1.8 | 3.6 | 4.5 |
| 2.2 | D | Mn^{e}/ligand | Ca^{c}+Zr^{d} | 3.5 | 4.5 | 5.8 | 7.4 | 2.8 | 1.7 | 2.4 | 3.3 |
| 2.3 | E | Mn^{e}/ligand | Ca^{c}+Zr^{d} | 4.5 | 10.7 | 12.1 | 9.5 | 3.4 | 4.1 | 6.0 | 6.7 |
| 2.4 | F | Mn^{e}/ligand | Ca^{c}+Zr^{d} | 2.9 | 5.3 | 6.4 | 5.8 | 2.2 | 4.0 | 2.5 | 3.5 |
| 2.5 | C | Mn^{e}/ligand | none | 4.5 | 10.5 | 10.1 | 8.1 | 4.0 | 4.9 | 5.8 | 5.1 |
| 2.6 | D | Mn^{e}/ligand | none | 5.3 | 9.1 | 8.8 | 6.9 | 3.4 | 3.5 | 4.5 | 3.8 |
| 2.7 | E | Mn^{e}/ligand | none | 3.2 | 14.5 | 14.5 | 10.8 | 3.5 | 4.1 | 5.0 | 4.4 |
| 2.8 | F | Mn^{e}/ligand | none | 3.8 | 7.7 | 5.9 | 6.3 | 3.5 | 2.8 | 4.2 | 4.0 |
| 2.9 | C | Co^{b} | Ca^{c}+Zr^{d} | 4.6 | >20 | >20 | >20 | 1.8 | 9.3 | >20 | >20 |
| 2.10 | D | Co^{b} | Ca^{c}+Zr^{d} | 4.5 | 14.7 | >20 | >20 | 1.2 | 6.7 | 10.3 | 15.8 |
| 2.11 | E | Co^{b} | Ca^{c}+Zr^{d} | 4.6 | >20 | >20 | >20 | 1.8 | 6.5 | 11.5 | 12.2 |
| 2.12 | F | Co^{b} | Ca^{c}+Zr^{d} | 4.5 | 9.3 | 8.8 | 8.8 | 2.0 | 3.4 | 4.7 | 5.3 |
| 2.13 | C | Co^{b} | none | 8.1 | >20 | >20 | >20 | 5.1 | >20 | >20 | >20 |
| 2.14 | D | Co^{b} | none | 6.7 | >20 | >20 | >20 | 2.0 | 15.2 | 17.7 | 16.5 |
| 2.15 | E | Co^{b} | none | 8.6 | >20 | >20 | >20 | 4.8 | 17.8 | 17.8 | 16.7 |
| 2.16 | F | Co^{b} | none | 5.9 | 12.9 | >20 | 16.5 | 3.3 | 6.6 | 10.0 | 8.4 |
| 2.17 | C | DC^{f} | Ca^{c}+Zr^{d} | 3.5 | 10.3 | 12.3 | 16.3 | 3.3 | 6.1 | 12.4 | 14.3 |
| 2.18 | D | DC^{f} | Ca^{c}+Zr^{d} | 3.2 | 6.4 | 9.9 | 9.9 | 2.3 | 2.4 | 4.4 | 3.6 |
| 2.19 | E | DC^{f} | Ca^{c}+Zr^{d} | 3.8 | 13.6 | 18.3 | >20 | 2.0 | 4.2 | 4.8 | 4.8 |
| 2.20 | F | DC^{f} | Ca^{c}+Zr^{d} | 3.0 | 7.0 | 6.9 | 5.8 | 1.7 | 3.5 | 2.3 | 2.3 |
| 2.21 | C | DC^{f} | none | 9.5 | >20 | >20 | 15.0 | 3.3 | >20 | >20 | 9.0 |
| 2.22 | D | DC^{f} | none | 3.3 | 13.3 | >20 | 12.0 | 2.4 | 7.1 | 7.1 | 4.1 |
| 2.23 | E | DC^{f} | none | 11.1 | >20 | >20 | >20 | 4.7 | 10.3 | 11.4 | 8.3 |
| 2.24 | F | DC^{f} | none | 6.5 | 8.3 | 10.3 | 9.0 | 2.9 | 3.3 | 3.8 | 2.7 |

| | | | | | | | | | | | |
|---|---|---|---|---|---|---|---|---|---|---|---|
| ^{b}3.4.10⁻² wt% Co on total composition; ^{c}2.4.10⁻² wt% Ca on total composition; ^{d}17.10⁻² wt% Zr on total composition; ^{e}2.9.10⁻² wt% Mn on total composition; ^{f}1.0.10⁻² wt% Mn on total composition. | | | | | | | | | | | |

### Example 3 - Retardation of aged drying after storage at 50 °C

Paints were prepared using bases G and H by adding driers of the type as indicated in Table 5. Paints with Base G are comparative examples; paints with Base H are examples according to the invention. Initial drying time and drying time after 2, 5 and 8 weeks storage at 35 °C were determined as described above.

**Table 5 Effect of sodium salts on aged drying (storage 50 °C)**

| Paint no. | Base | Primary drier | Primary drier metal (wt%) | Co-driers | BK drying at 10 °C (hours) | | | | BK drying at 23 °C (hours) | | | |
|---|---|---|---|---|---|---|---|---|---|---|---|---|
| | | | | | initial | 2 wks | 5 wks | 8 wks | initial | 2 wks | 5 wks | 8 wks |
| 3.1 | G | DC | 4.8·10⁻³ | Ca^{c}+Zr^{d} | 6.8 | 14.7 | >20 | >20 | 2.7 | 6.7 | 13.0 | >20 |
| 3.2 | H | DC | 4.8·10⁻³ | Ca^{c}+Zr^{d} | 4.7 | 8.6 | 12.1 | 14.6 | 2.5 | 3.8 | 5.0 | 6.0 |
| 3.3 | G | DC | 4.8·10⁻³ | none | 15.5 | >20 | >20 | >20 | 7.2 | >20 | >20 | >20 |
| 3.4 | H | DC | 4.8·10⁻³ | none | 7.0 | >20 | >20 | >20 | 3.1 | 9.8 | 10.1 | 5.4 |
| 3.5 | G | DC | 9.5·10⁻³ | Ca^{c}+Zr^{d} | 3.5 | 6.9 | 13.9 | 13.4 | 3.0 | 3.6 | 6.8 | 7.5 |
| 3.6 | H | DC | 9.5·10⁻³ | Ca^{c}+Zr^{d} | 2.7 | 5.0 | 6.9 | 7.1 | 1.4 | 1.8 | 3.0 | 3.3 |
| 3.7 | G | DC | 9.6·10⁻³ | none | 8.1 | 17.5 | >20 | >20 | 3.3 | 12.2 | >20 | 13.6 |
| 3.8 | H | DC | 9.6·10⁻³ | none | 3.3 | 11.9 | 13.8 | 13.7 | 1.9 | 4.9 | 6.3 | 4.5 |
| 3.9 | G | DriCAT | 4.8·10⁻⁴ | Ca^{c}+Zr^{d} | 8.5 | 12.5 | 13.5 | 14.7 | 7.2 | 12.4 | 11.6 | 11.6 |
| 3.10 | H | DriCAT | 4.8·10⁻⁴ | Ca^{c}+Zr^{d} | 6.5 | 10.4 | 10.5 | 11.0 | 4.5 | 7.6 | 7.2 | 7.3 |
| 3.11 | G | DriCAT | 4.8·10⁻⁴ | none | 17.5 | >20 | >20 | >20 | 16.2 | 18.2 | >20 | >20 |
| 3.12 | H | DriCAT | 4.8·10⁻⁴ | none | 11.1 | 14.9 | 15.7 | 16.2 | 10.3 | 12.2 | 12.3 | 14.7 |
| 3.13 | G | DriCAT | 9.5·10⁻⁴ | Ca^{c}+Zr^{d} | 6.7 | 9.1 | 9.3 | 8.8 | 4.0 | 7.9 | 7.6 | 6.5 |
| 3.14 | H | DriCAT | 9.5·10⁻⁴ | Ca^{c}+Zr^{d} | 3.9 | 7.7 | 7.0 | 6.7 | 2.8 | 5.7 | 5.0 | 3.7 |
| 3.15 | G | DriCAT | 9.6·10⁻⁴ | none | 11.5 | 15.0 | 16.1 | 13.7 | 9.1 | 12.4 | 14.4 | 12.1 |
| 3.16 | H | DriCAT | 9.6·10⁻⁴ | none | 7.2 | 11.3 | 10.6 | 10.4 | 4.8 | 7.8 | 9.2 | 10.5 |
| 3.17 | G | BOC | 4.3·10⁻⁴ | Ca^{c}+Zr^{d} | 10.1 | >20 | >20 | >20 | 5.2 | >20 | 17.5 | 18.1 |
| 3.18 | H | BOC | 4.3·10⁻⁴ | Ca^{c}+Zr^{d} | 5.1 | 16.0 | >20 | >20 | 2.6 | 11.1 | 13.6 | 11.3 |
| 3.19 | G | BOC | 4.3·10⁻⁴ | none | >20 | >20 | >20 | >20 | 10.3 | >20 | >20 | >20 |
| 3.20 | H | BOC | 4.3·10⁻⁴ | none | 11.2 | >20 | >20 | >20 | 4.0 | >20 | >20 | >20 |
| 3.21 | G | BOC | 8.5·10⁻⁴ | Ca^{c}+Zr^{d} | 6.0 | 11.6 | 15.9 | 17.5 | 2.8 | 9.1 | 8.9 | 8.3 |
| 3.22 | H | BOC | 8.5·10⁻⁴ | Ca^{c}+Zr^{d} | 4.1 | 8.1 | 8.9 | 10.3 | 2.1 | 4.3 | 5.6 | 3.3 |
| 3.23 | G | BOC | 8.6·10⁻⁴ | none | 14.9 | >20 | >20 | >20 | 7.7 | 15.2 | 15.2 | 14.9 |
| 3.24 | H | BOC | 8.6·10⁻⁴ | none | 6.9 | 15.2 | >20 | >20 | 2.4 | 8.7 | 11.1 | 8.2 |
| 3.25 | G | Co | 1.9·10⁻² | Ca^{c}+Zr^{d} | 6.2 | 15.1 | >20 | >20 | 2.3 | 11.3 | >20 | >20 |
| 3.26 | H | Co | 1.9·10⁻² | Ca^{c}+Zr^{d} | 3.9 | 15.1 | >20 | >20 | 1.8 | 9.3 | 13.2 | 13.7 |
| 3.27 | G | Co | 1.9·10⁻² | none | 13.0 | >20 | >20 | >20 | 7.7 | >20 | >20 | >20 |
| 3.28 | H | Co | 1.9·10⁻² | none | 7.7 | >20 | >20 | >20 | 3.3 | 16.1 | >20 | >20 |
| 3.29 | G | Co | 3.8·10⁻² | Ca^{c}+Zr^{d} | 3.6 | 9.0 | 16.7 | >20 | 1.8 | 4.6 | 11.3 | 14.5 |
| 3.30 | H | Co | 3.8·10⁻² | Ca^{c}+Zr^{d} | 2.2 | 6.9 | 9.1 | 12.1 | 1.6 | 3.3 | 5.1 | 7.7 |
| 3.31 | G | Co | 3.8·10⁻² | none | 7.5 | >20 | >20 | >20 | 2.8 | 16.7 | >20 | >20 |
| 3.32 | H | Co | 3.8·10⁻² | none | 4.5 | 13.9 | >20 | >20 | 2.7 | 7.2 | 15.2 | 17.3 |
| 3.33 | G | ECOS | 1.9·10⁻² | Ca^{c}+Zr^{d} | 6.7 | 16.3 | >20 | >20 | 2.5 | 11.5 | >20 | >20 |
| 3.34 | H | ECOS | 1.9·10⁻² | Ca^{c}+Zr^{d} | 4.0 | 15.7 | >20 | >20 | 1.9 | 10.0 | 13.1 | 13.7 |
| 3.35 | G | ECOS | 1.9·10⁻² | none | 15.0 | >20 | >20 | >20 | 9.5 | >20 | >20 | >20 |
| 3.36 | H | ECOS | 1.9·10⁻² | none | 8.6 | >20 | >20 | >20 | 3.6 | 16.3 | >20 | >20 |
| 3.37 | G | ECOS | 3.8·10⁻² | Ca^{c}+Zr^{d} | 4.0 | 10.0 | >20 | >20 | 1.6 | 5.2 | 12.8 | >20 |
| 3.38 | H | ECOS | 3.8·10⁻² | Ca^{c}+Zr^{d} | 2.5 | 7.7 | 11.0 | 14.5 | 1.5 | 4.2 | 6.0 | 8.2 |
| 3.39 | G | ECOS | 3.8·10⁻² | none | 7.7 | >20 | >20 | >20 | 2.9 | 15.9 | >20 | >20 |
| 3.40 | H | ECOS | 3.8·10⁻² | none | 4.6 | 14.3 | >20 | >20 | 2.5 | 7.7 | 15.6 | 16.1 |

| | | | | | | | | | | | | |
|---|---|---|---|---|---|---|---|---|---|---|---|---|
| ^{c}2.4.10⁻² wt% Ca on total composition; ^{d}17.10⁻² wt% Zr on total composition. | | | | | | | | | | | | |

The results in Table 5 show that the addition of a water-soluble sodium carboxylate salt to the water phase of a water-in-oil coating composition leads to a reduction of the increase of drying time upon aging. The examples further show that this effect occurs for different primary driers, irrespective of whether co-driers are present.

### Example 4 - Salts with different metals

Paints were prepared using bases I, J, K, and L by adding primary driers of the type as indicated in Table 6. A small amount of Exxsol D40 was added (2-3 wt% on total composition) to keep the weight parts of liquid constant. Initial drying time and drying time after 2, 5 and 8 weeks storage at 35 °C were determined as described above.

**Table 6 Effect of carboxylate salts on aged drying (storage 50 °C)**

| Paint no. | Base | Primary drier | Co-driers | BK drying at 10 °C (hours) | | | | BK drying at 23 °C (hours) | | | |
|---|---|---|---|---|---|---|---|---|---|---|---|
| | | | | initial | 2 wks | 5 wks | 8 wks | initial | 2 wks | 5 wks | 8 wks |
| 4.1 | I | DC^{a} | Ca^{c}+Zr^{d} | 3.6 | 6.3 | 6.8 | 6.9 | 1.5 | 2.4 | 2.8 | 2.6 |
| 4.2 | J | DC^{a} | Ca^{c}+Zr^{d} | 3.8 | 7.3 | 6.4 | 6.3 | 2.6 | 2.9 | 3.3 | 2.7 |
| 4.3 | K | DC^{a} | Ca^{c}+Zr^{d} | 3.7 | 6.3 | 6.8 | 6.7 | 2.5 | 2.4 | 3.2 | 2.6 |
| 4.4 | L | DC^{a} | Ca^{c}+Zr^{d} | 3.6 | 5.8 | 6.3 | 6.8 | 1.8 | 2.5 | 2.1 | 2.4 |
| 4.5 | I | Co^{b} | Ca^{c}+Zr^{d} | 4.1 | 7.1 | 7.3 | 9.3 | 1.1 | 3.7 | 4.3 | 4.5 |
| 4.6 | J | Co^{b} | Ca^{c}+Zr^{d} | 3.7 | 7.3 | 8.3 | 10.5 | 1.7 | 4.3 | 5.5 | 5.5 |
| 4.7 | K | Co^{b} | Ca^{c}+Zr^{d} | 4.5 | 7.1 | 7.8 | 8.6 | 1.1 | 3.5 | 3.8 | 4.8 |
| 4.8 | L | Co^{b} | Ca^{c}+Zr^{d} | 4.2 | 7.0 | 6.5 | 7.0 | 1.2 | 4.0 | 3.8 | 3.8 |

| | | | | | | | | | | | |
|---|---|---|---|---|---|---|---|---|---|---|---|
| ^{a} 1.0.10⁻² wt% Mn on total composition; ^{b}3.4.10⁻² wt% Co on total composition; ^{c}2.4.10⁻² wt% Ca on total composition; ^{d} 17.10⁻² wt% Zr on total composition. | | | | | | | | | | | |

### Example 5 - Reviving of paint

A water-in-oil paint 5A was prepared comprising 15.4 weight parts of water emulsified in a non-aqueous phase comprising 48.5 weight parts of alkyd (Setal 270 SM-70), 24.4 weight parts of Tioxide TR 92, 0.1 weight parts of Nuosperse 657, 0.2 weight parts of Bentone SD-1, 0.4 weight parts of Exkin 2, 12.6 weight parts of Exxsol D 40, 0.5 weight parts of Nuodex Ca5, 1.0 weight parts of Nuodex Zr18, and 1.0 weight parts of Nuodex DryCoat.

Drying time was determined at one day after its preparation of the paint (initial drying time) using the method described above. Paint 5A was then stored at 50 °C for 8 weeks, cooled to room temperature and split into 7 samples: 5A1 to 5A7. A salt solution of the type and in an amount listed in Table 7 was added to 104 weight parts of a paint sample. All paints comprised: 1.0.10⁻² wt% Mn on total composition; 2.4.10⁻² wt% Ca on total composition; and 17.10⁻² wt% Zr on total composition.

**Table 7 Aged drying of revived paints**

| Paint no. | salt | salt conc. in solution (wt%) | weight parts added | BK drying at 10 °C (hours) | | BK drying at 23 °C (hours) | |
|---|---|---|---|---|---|---|---|
| | | | | initial | 8 wks | initial | 8 wks |
| 5A1 | none | | | 4.5 | 14.9 | 2.6 | 11.2 |
| 5A2 | sodium acetate trihydrate | 50 | 0.49 | | 6.6 | | 3.3 |
| 5A3 | potassium acetate | 50 | 0.35 | | 6.3 | | 2.8 |
| 5A4 | lithium acetate dihydrate | 50 | 0.37 | | 6.2 | | 2.8 |
| 5A5 | magnesium acetate tetra hydrate | 50 | 0.77 | | 7.0 | | 2.6 |
| 5A6 | sodium 2-ethylhexanoate | 50 | 0.60 | | 5.8 | | 2.5 |
| 5A7 | sodium propionate | 9.1 | 1.91 | | 6.3 | | 2.3 |

These results show that the paint had a good drying time of a few hours (paint 5A), immediately after preparation. After aging at 50 °C for 8 weeks, the drying times had increased to 14.9 and 11.2 hours, at 10 °C and at 23 °C, respectively. Addition of a carboxylate salt of an alkali or alkaline earth metal yield aged drying times comparable to the initial drying times.

## Claims

1. A water-in-oil coating composition comprising a water phase emulsified in a non-aqueous liquid phase, wherein the non-aqueous phase comprises an autoxidizable binder and wherein a salt is dissolved in the water phase, wherein the salt is a carbonate or an organic salt of an alkali or alkaline earth metal, and wherein the coating composition comprises a primary drier.

2. A water-in-oil coating composition according to claim 1, wherein the alkali or alkaline earth metal is lithium, sodium, potassium, cesium, magnesium, calcium, strontium, or barium, preferably is lithium, sodium, potassium, cesium, or magnesium.

3. A water-in-oil coating composition according to claim 2, wherein the metal is sodium.

4. A water-in-oil coating composition according to any one of the preceding claims, wherein the salt is a carbonate or a carboxylate of the metal.

5. A water-in-oil coating composition according to claim 3 and 4, wherein the salt is sodium acetate, sodium propionate, or sodium 2-ethyl hexanoate.

6. A water-in-oil coating composition according to any one of the preceding claims, wherein the salt has a solubility in the water phase of at least 100 grams per litre and wherein the solubility of the salt in the water phase is at least 10 times higher than the solubility of the salt in the non-aqueous phase.

7. A water-in-oil coating composition according to any one of the preceding claims comprising in the range of from 0.1 to 10 wt% of the salt, based on the weight of the water phase, preferably of from 1 to 5 wt%.

8. A water-in-oil coating composition according to any one of the preceding claims, wherein the coating composition comprises less than 0.1 wt% of cyclodextrin, based on the weight of autoxidizable binder, more preferably is free of cyclodextrin.

9. A water-in-oil coating composition according to any one of the preceding claims, wherein the amount of water is more than 1.0 wt%, preferably more than 5.0 wt%, based on the weight of the total coating composition.

10. A water-in-oil coating composition according to any one of the preceding claims, wherein the amount of water is less than 49 wt%, preferably less than 25 wt%, based on the weight of the total coating composition.

11. A water-in-oil coating composition according to any one of the preceding claims, wherein the autoxidizable binder is an alkyd-based resin, more preferably is an alkyd resin.

12. A substrate coated with a coating deposited from a water-in-oil coating composition according to any one of claims 1 to 11.

13. A process to improve the aged drying of a water-in-oil coating composition comprising the steps of:
a. providing a water-in-oil coating composition comprising a water phase emulsified in a non-aqueous liquid phase, wherein the non-aqueous phase comprises an autoxidizable binder, and wherein the coating composition comprises a primary drier; and
b. dissolving a salt as specified in any one of claims 1 to 6 in the water phase in an amount in the range of from 0.1 to 10 wt% based on the weight of the water phase, preferably of from 1 to 5 wt%.

14. A process according to claim 13, wherein the autoxidizable binder is an alkyd resin.

## Patentansprüche

1. Wasser-in-Öl-Beschichtungszusammensetzung, umfassend eine in einer nichtwässrigen flüssigen Phase emulgierte Wasserphase, wobei die nichtwässrige Phase ein autoxidierbares Bindemittel umfasst und wobei in der Wasserphase ein Salz gelöst ist, wobei es sich bei dem Salz um ein Carbonat oder ein organisches Salz eines Alkali- oder Erdalkalimetalls handelt, und wobei die Beschichtungszusammensetzung einen primären Trockenstoff umfasst.

2. Wasser-in-Öl-Beschichtungszusammensetzung nach Anspruch 1, wobei es sich bei dem Alkali- oder Erdalkalimetall um Lithium, Natrium, Kalium, Caesium, Magnesium, Calcium, Strontium oder Barium und vorzugsweise um Lithium, Natrium, Kalium, Caesium oder Magnesium handelt.

3. Wasser-in-Öl-Beschichtungszusammensetzung nach Anspruch 2, wobei es sich bei dem Metall um Natrium handelt.

4. Wasser-in-Öl-Beschichtungszusammensetzung nach einem der vorhergehenden Ansprüche, wobei es sich bei dem Salz um ein Carbonat oder ein Carboxylat des Metalls handelt.

5. Wasser-in-Öl-Beschichtungszusammensetzung nach Anspruch 3 und 4, wobei es sich bei dem Salz um Natriumacetat, Natriumpropionat oder Natrium-2-ethylhexanoat handelt.

6. Wasser-in-Öl-Beschichtungszusammensetzung nach einem der vorhergehenden Ansprüche, wobei das Salz eine Löslichkeit in der Wasserphase von mindestens 100 Gramm pro Liter aufweist und wobei die Löslichkeit des Salzes in der Wasserphase mindestens 10-mal höher ist als die Löslichkeit des Salzes in der nichtwässrigen Phase.

7. Wasser-in-Öl-Beschichtungszusammensetzung nach einem der vorhergehenden Ansprüche, umfassend im Bereich von 0,1 bis 10 Gew.-% des Salzes, bezogen auf das Gewicht der Wasserphase, vorzugsweise von 1 bis 5 Gew.-%.

8. Wasser-in-Öl-Beschichtungszusammensetzung nach einem der vorhergehenden Ansprüche, wobei die Beschichtungszusammensetzung weniger als 0,1 Gew.-% Cyclodextrin, bezogen auf das Gewicht von autoxidierbarem Bindemittel, umfasst und weiter bevorzugt frei von Cyclodextrin ist.

9. Wasser-in-Öl-Beschichtungszusammensetzung nach einem der vorhergehenden Ansprüche, wobei die Wassermenge mehr als 1,0 Gew.-%, vorzugsweise mehr als 5,0 Gew.-%, bezogen auf das Gewicht der gesamten Beschichtungszusammensetzung, beträgt.

10. Wasser-in-Öl-Beschichtungszusammensetzung nach einem der vorhergehenden Ansprüche, wobei die Wassermenge weniger als 49 Gew.-%, vorzugsweise weniger als 25 Gew.-%, bezogen auf das Gewicht der gesamten Beschichtungszusammensetzung, beträgt.

11. Wasser-in-Öl-Beschichtungszusammensetzung nach einem der vorhergehenden Ansprüche, wobei es sich bei dem autoxidierbaren Bindemittel um ein alkydbasiertes Harz und weiter bevorzugt um ein Alkydharz handelt.

12. Substrat, das mit einer aus einer Wasser-in-Öl-Beschichtungszusammensetzung nach einem der Ansprüche 1 bis 11 abgeschiedenen Beschichtung beschichtet ist.

13. Verfahren zur Verbesserung der Trocknung einer Wasser-in-Öl-Beschichtungszusammensetzung nach Alterung, das folgende Schritte umfasst:
a. Bereitstellen einer Wasser-in-Öl-Beschichtungszusammensetzung, umfassend eine in einer nichtwässrigen flüssigen Phase emulgierte Wasserphase, wobei die nichtwässrige Phase ein autoxidierbares Bindemittel umfasst und wobei die Beschichtungszusammensetzung einen primären Trockenstoff umfasst; und
b. Lösen eines Salzes gemäß einem der Ansprüche 1 bis 6 in der Wasserphase in einer Menge im Bereich von 0,1 bis 10 Gew.-%, bezogen auf das Gewicht der Wasserphase, vorzugsweise von 1 bis 5 Gew.-%.

14. Verfahren nach Anspruch 13, wobei es sich bei dem autoxidierbaren Bindemittel um ein Alkydharz handelt.

## Revendications

1. Composition de revêtement eau-dans-huile comprenant une phase aqueuse émulsifiée dans une phase liquide non aqueuse, la phase non aqueuse comprenant un liant auto-oxydable et un sel étant dissous dans la phase aqueuse, le sel étant un carbonate ou un sel organique d'un métal alcalin ou alcalino-terreux, et la composition de revêtement comprenant un siccatif primaire.

2. Composition de revêtement eau-dans-huile selon la revendication 1, le métal alcalin ou alcalino-terreux étant lithium, le sodium, le potassium, le césium, le magnésium, le calcium, le strontium, ou le baryum, préférablement étant le lithium, le sodium, le potassium, le césium, ou le magnésium.

3. Composition de revêtement eau-dans-huile selon la revendication 2, le métal étant le sodium.

4. Composition de revêtement eau-dans-huile selon l'une quelconque des revendications précédentes, le sel étant un carbonate ou un carboxylate du métal.

5. Composition de revêtement eau-dans-huile selon les revendications 3 et 4, le sel étant l'acétate de sodium, le propionate de sodium ou le 2-éthylhexanoate de sodium.

6. Composition de revêtement eau-dans-huile selon l'une quelconque des revendications précédentes, le sel possédant une solubilité dans la phase aqueuse d'au moins 100 grammes par litre et la solubilité du sel dans la phase aqueuse étant au moins 10 fois plus grande que la solubilité du sel dans la phase non aqueuse.

7. Composition de revêtement eau-dans-huile selon l'une quelconque des revendications précédentes comprenant dans la plage allant de 0,1 à 10 % en poids du sel, sur la base du poids de la phase aqueuse, préférablement allant de 1 à 5 % en poids.

8. Composition de revêtement eau-dans-huile selon l'une quelconque des revendications précédentes, la composition de revêtement comprenant moins de 0,1 % en poids de cyclodextrine, sur la base du poids de liant auto-oxydable, plus préférablement étant exempte de cyclodextrine.

9. Composition de revêtement eau-dans-huile selon l'une quelconque des revendications précédentes, la quantité d'eau étant supérieure à 1,0 % en poids, préférablement supérieure à 5,0 % en poids, sur la base du poids de la composition de revêtement totale.

10. Composition de revêtement eau-dans-huile selon l'une quelconque des revendications précédentes, la quantité d'eau étant inférieure à 49 % en poids, préférablement inférieure à 25 % en poids, sur la base du poids de la composition de revêtement totale.

11. Composition de revêtement eau-dans-huile selon l'une quelconque des revendications précédentes, le liant auto-oxydable étant une résine à base d'alkyde, plus préférablement étant une résine d'alkyde.

12. Substrat revêtu avec un revêtement déposé d'une composition de revêtement eau-dans-huile selon l'une quelconque des revendications 1 à 11.

13. Procédé pour l'amélioration du séchage vieilli d'une composition de revêtement eau-dans-huile comprenant les étapes de :
a. mise à disposition d'une composition de revêtement eau-dans-huile comprenant une phase aqueuse émulsifiée dans une phase liquide non aqueuse, la phase non aqueuse comprenant un liant auto-oxydable, et la composition de revêtement comprenant un siccatif primaire ; et
b. dissolution d'un sel tel que spécifié dans l'une quelconque des revendications 1 à 6 dans la phase aqueuse en une quantité dans la plage allant de 0,1 à 10 % en poids sur la base du poids de la phase aqueuse, préférablement allant de 1 à 5 % en poids.

14. Procédé selon la revendication 13, le liant auto-oxydable étant une résine d'alkyde.
